# EUROPEAN PATENT APPLICATION

(11) **EP 4 733 864 A1**
(43) Date of publication of application: **29.04.2026**
(21) Application number: 25198401.9
(22) Date of filing: 27.08.2025
(51) Int. Cl.: G05B 9/03, G05B 19/042, G05B 19/05

(54) **CONTROL SYSTEM**

(30) Priority: 22.10.2024 JP 2024186123
(71) Applicant: Hitachi, Ltd., Tokyo 100-8280 (JP)
(72) Inventor: AONO, Masahiro, Tokyo, 100-8280 (JP); SHIMIZU, Toshiki, Tokyo, 100-8280 (JP); OTSUKA, Yusaku, Tokyo, 100-8280 (JP); TANAKA, Yuki, Tokyo, 100-8280 (JP)
(74) Representative: Mewburn Ellis LLP

(57) **Abstract**

The present disclosure provides a technique capable of increasing or decreasing the number of control devices in a control system for controlling a control target from a plurality of control devices. A control system of the present disclosure is a control system (300) including a plurality of control devices (301, 302), at least one control target (307) that is controlled by the plurality of control devices, and a computer (303) that is connected to the plurality of control devices and the control target via a control network, in which the computer is configured to execute processing of receiving an application to participate in the control system from an additional control device (311), processing of acquiring information related to states of the plurality of control devices and transmitting the information to the additional control device, and processing of managing transmission and reception in the control network.

## Description

### BACKGROUND OF THE INVENTION

### 1. Field of the Invention

The present disclosure relates to a control system.

### 2. Description of the Related Art

A control system for feedback-controlling a control target from a control device has been known. JP-H6-274201-A describes "a control method of a state feedback control system in which a feedback coefficient is changed during an operation, in which a predetermined state quantity that is periodically detected is differentiated or a difference from a previous state quantity is obtained, the differential value or the difference value is multiplied by the feedback coefficient, and the multiplication result is integrated or integrated with a previous control command value to obtain a current control command value."

### SUMMARY OF THE INVENTION

For example, there is a demand for controlling one control target from a plurality of control devices in order to configure a redundant system. In this case, there is a possibility that the number of control devices is increased or decreased, but it is difficult to increase the number of control devices from the middle of feedback control such as proportional-integral-derivative (PID) control.

Therefore, the present disclosure provides a technique capable of increasing or decreasing the number of control devices in a control system for controlling a control target from a plurality of control devices.

In order to solve the above problem, a control system of the present disclosure is a control system including a plurality of control devices, at least one control target that is controlled by the plurality of control devices, and a computer that is connected to the plurality of control devices and the control target via a control network, in which the computer is configured to execute processing of receiving an application to participate in the control system from an additional control device, processing of acquiring information related to states of the plurality of control devices and transmitting the information to the additional control device, and processing of managing transmission and reception in the control network.

Further features related to the present disclosure will become apparent from the description of the present specification and the accompanying drawings. In addition, the aspects of the present disclosure are achieved and realized by combinations of elements and various elements and by the manners of the following detailed description and the accompanying claims. The description of the present specification is merely a typical example and does not limit the claims or application examples of the present disclosure in any sense.

According to the technique of the present disclosure, it is possible to increase or decrease the number of control devices in a control system for controlling a control target from a plurality of control devices. Problems, configurations, and effects other than those described above will be clarified by the description of the following embodiments.

### BRIEF DESCRIPTION OF THE DRAWINGS

FIG. 1 is a block diagram depicting an example of a control system for controlling a single control target by using a single control device;
FIG. 2 is a block diagram depicting an example of a control system for controlling a single control target by using two control devices;
FIG. 3 is a functional block diagram depicting a configuration of a control system according to a first embodiment;
FIG. 4 is a hardware configuration diagram of a control device;
FIG. 5 is a hardware configuration diagram of a control system management section;
FIG. 6 is a functional block diagram depicting a configuration of a control system according to a second embodiment; and
FIG. 7 is a functional block diagram depicting a configuration of a control system according to a third embodiment.

### DESCRIPTION OF THE PREFERRED EMBODIMENTS

### [Regarding control of control target]

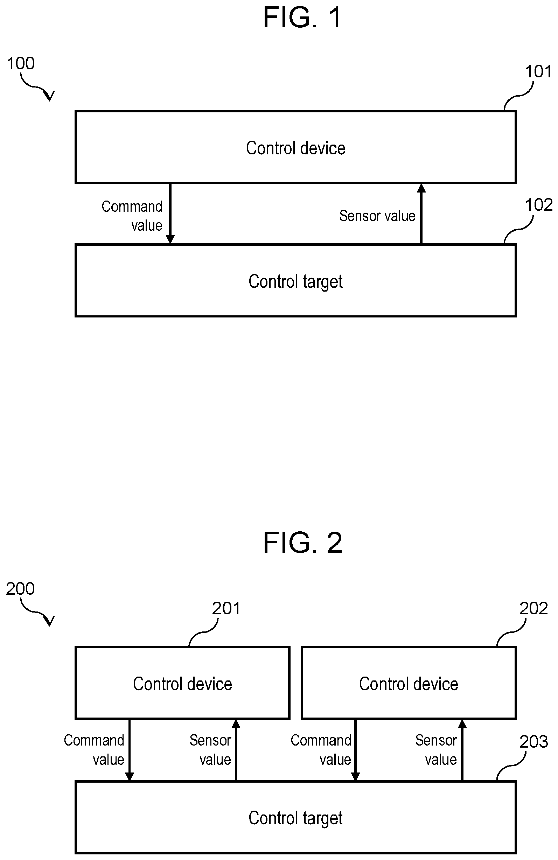

FIG. 1 is a block diagram depicting an example of a control system 100 for controlling a single control target 102 by using a single control device 101. Here, for example, the control device 101 is a programmable logic controller (PLC), and the control target 102 is a motor. In the PLC, a ladder program for performing PID control to control the rotation speed of the motor is implemented. The control device 101 transmits a current value for motor rotation to the control target 102 as a command value. The control target 102 transmits the value of the current motor rotation speed acquired by a sensor to the control device 101. The control is continued by using the current rotation speed for feedback control.

In consideration of a failure of the control device, a redundant system is configured in some cases. There are multiple methods of configuring a redundant system. For example, in a method called a double system, two control devices are simultaneously operated, and outputs of the two control devices are compared with each other, and when these outputs are different from each other, the devices are safely stopped. By using this method, the malfunction caused by a failure of the control device can be greatly reduced, but it is inevitable that the control is stopped at that time. If there is a high possibility that a command value is not output in the event of a failure instead of an abnormal value being output, a method of simultaneously controlling the control target from two control devices is considered instead of the double system.

FIG. 2 is a block diagram depicting an example of a control system 200 for controlling a single control target 203 by using two control devices 201 and 202. The two control devices 201 and 202 transmit command values to the control target 203. Then, a sensor value is transmitted from the control target 203 to each of the control devices 201 and 202, and feedback control is performed. The control device 201 and the control device 202 alternately operate while shifting the timing from each other. In the case of this configuration, even when one control device fails and cannot transmit the command value, the control can be continued by the other control device. However, in this configuration, in the case where the failed control device is restored, it is not possible to return to the control state using the two control devices while continuing the control. This is because, in the case where there is feedback control, especially integral control such as PID control, the control cannot be executed if there is no control information until then.

Here, the control information includes the history of control by the control device. The history of control includes the history of target values, the history of command values, the history of fedback sensor values, and the like. In this specification, the control information is referred to as information related to the state of the control device in some cases. In the case where the control device is restored, it is necessary to obtain the information related to the state of the control device again.

### [First Embodiment]

### <Configuration example of control system>

Separation and restoration due to a failure of the control device can be generalized in the form of an increase or decrease in the number of control devices. In a first embodiment, a configuration of a control system in which, when a single control target is controlled from a plurality of control devices, the number of control devices can be increased or decreased while the control is continued will be described.

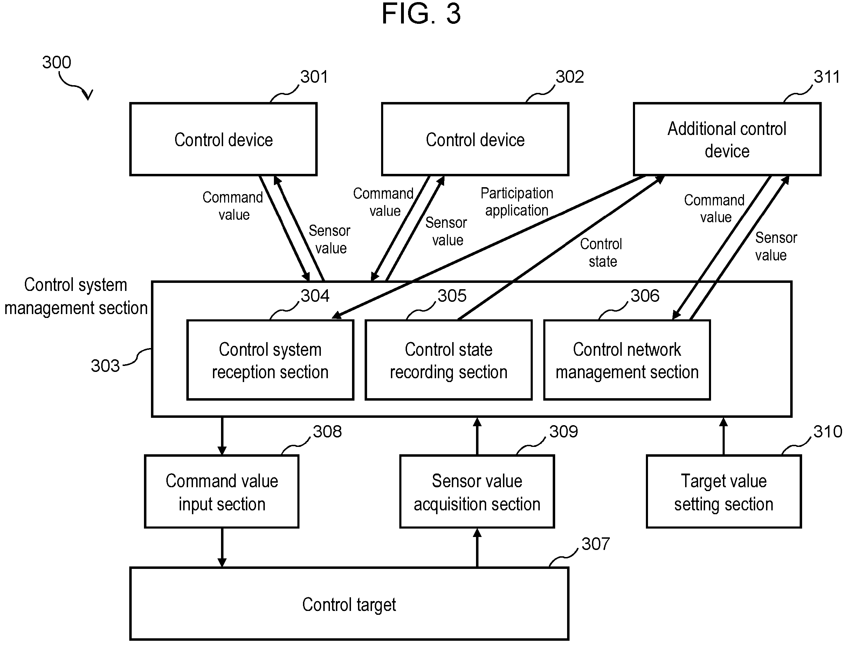

FIG. 3 is a functional block diagram depicting a configuration of a control system 300 according to the first embodiment. The control system 300 is a system for controlling a single control target 307 from a plurality of control devices. The control system 300 is provided with control devices 301 and 302, a control system management section 303, a control target 307, a command value input section 308, a sensor value acquisition section 309, and a target value setting section 310. Here, for example, the control devices 301 and 302 are PLCs, and the control target 307 is a motor. The control system management section 303 has a control system reception section 304, a control state recording section 305, and a control network management section 306.

The control devices 301 and 302 transmit command values to the control target 307. The command values pass through the control network management section 306 in the control system management section 303. The control network management section 306 is configured to manage communication in the control system 300. Such a control network is realized by, for example, a Publish/Subscribe-type (called "Pub/Sub") network such as message queuing telemetry transport (MQTT). The control network management section 306 has a function corresponding to an MQTT broker. Alternatively, the control network may be a ring-type network.

The command value input section 308 transmits the command values received from the control network management section 306 to the control target 307. The sensor value acquisition section 309 acquires the state of the control target 307 by a sensor. The sensor value acquisition section 309 transmits the sensor value to each of the control devices 301 and 302 via the control network management section 306, as in the case of the command values. At this time, the control system management section 303 calculates the control state based on the command values (integrates or sums the history) and records it in the control state recording section 305. This control state is an integrated value of a difference between a target value and a sensor value to be used for, for example, integral control in PID control. The target value setting section 310 determines a target value of the control and transmits it to the control devices 301 and 302 via the control network management section 306.

Each control device performs control at any timing. The control cycle and the control timing are determined by the performance of each control device itself or a request from the control system, irrespective of another control device. The sensor value transmitted from the sensor value acquisition section 309 is updated in each control device, and the latest sensor value is held. The control device performs control by using the held latest sensor value at the timing at which the control device itself performs control. The same applies to the target value.

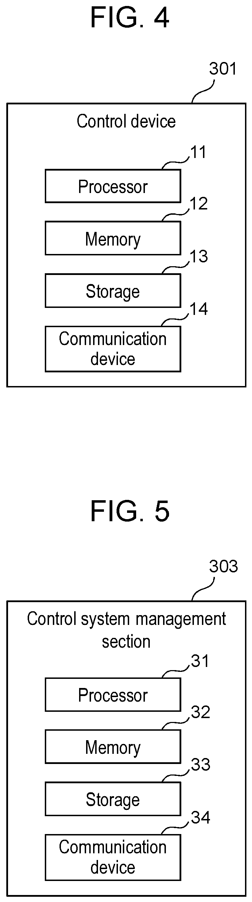

FIG. 4 is a hardware configuration diagram of the control device 301. The control device 301 can be, for example, an optional computer device such as a PLC or a general-purpose computer. The control device 301 is provided with a processor 11, a memory 12, a storage 13, and a communication device 14. The memory 12 stores therein a program necessary for feedback control. The processor 11 controls the control target 307 by executing the program stored in the memory 12. The memory 12 or the storage 13 stores therein the sensor value and the target value received via the control system management section 303. The communication device 14 is configured to transmit and receive information to/from the control system management section 303.

Since the control device 302 and an additional control device 311 to be described later can also have configurations similar to that of the control device 301, the description thereof is omitted. Some of the control devices 301, 302, and 311 may be arranged on the cloud. In this way, the control target 307 can be simultaneously controlled by a physical control device and a control device on the cloud.

FIG. 5 is a hardware configuration diagram of the control system management section 303. The control system management section 303 can be configured with, for example, a computer device such as a general-purpose computer or a server device. The control system management section 303 is provided with a processor 31, a memory 32, a storage 33, and a communication device 34. The processor 31 realizes the functions of the control system reception section 304, the control network management section 306, the command value input section 308, the sensor value acquisition section 309, and the target value setting section 310 by developing a program stored in the storage 33 to the memory 32 and executing it. The storage 33 functions as the control state recording section 305. The communication device 34 is configured to transmit and receive information to/from the command value input section 308 and the sensor value acquisition section 309.

The control system management section 303, the command value input section 308, the sensor value acquisition section 309, and the target value setting section 310 may be configured with one computer device or a plurality of computer devices. However, the command value input section 308 and the sensor value acquisition section 309 are physically arranged near the control target 307. It is not necessary to physically arrange the control system reception section 304, the control state recording section 305, the control network management section 306, and the target value setting section 310 near the control target 307. Some or all of these functional sections may be connected to the control target 307 in a manner communicable via the Internet such as on the cloud. In this way, the hardware configuration can be freely constructed.

### <Adding method of control device>

Processing in the case where an additional control device (additional control device 311) participates in the control system 300 will be described. The additional control device 311 is, for example, a control device that is restored after being stopped once due to some abnormality. First, the additional control device 311 transmits an application to participate in the control to the control system reception section 304 (for example, the MQTT broker) in the control system management section 303. The participation application includes communication information regarding the additional control device 311. The communication information is, for example, an Internet protocol (IP) address. The control system management section 303 transmits the control state information held by the control state recording section 305 to the additional control device 311 that has applied for participation. By receiving the control state information, the additional control device 311 can participate in the feedback control. Further, the control system reception section 304 notifies the control network management section 306 of the participation of the additional control device 311, and starts transmission of the sensor value and the target value to the additional control device 311. This processing is, for example, subscription in the Publish/Subscribe-type network.

In the case where a certain control device is separated from the control system 300, no special processing is required. The control system management section 303 does not hold individual control device information, and it is free to participate in or separate from the control network. It should be noted that, in the control system 300 of the present disclosure, it is sufficient if the number of control devices is plural, and the number is not particularly limited.

### <Technical effect>

As described above, the control system 300 according to the first embodiment is provided with the control devices 301 and 302 (a plurality of control devices), the control target 307 (at least one control target) controlled by the plurality of control devices, and the control system management section 303, the command value input section 308, the sensor value acquisition section 309, and the target value setting section 310 connected to the plurality of control devices and the control target via the control network. The control system management section 303 (computer) is configured to execute processing of the control system reception section 304 receiving an application to participate in the control system 300 from the additional control device 311, processing of acquiring information related to the states of the plurality of control devices recorded in the control state recording section 305 and transmitting the information to the additional control device 311, and processing of the control network management section 306 managing transmission and reception in the control network.

According to the control system 300 of the first embodiment, it is possible to increase or decrease the number of control devices in the control system for controlling a single control target by using a plurality of control devices.

### [Second Embodiment]

In a second embodiment, an example in which the number of control devices can be increased or decreased by using speed-type control without the control state recording section is depicted. In the present embodiment, the control is PID control. The speed-type control is control in which a command value is not directly generated, but a difference from the current command value is generated.

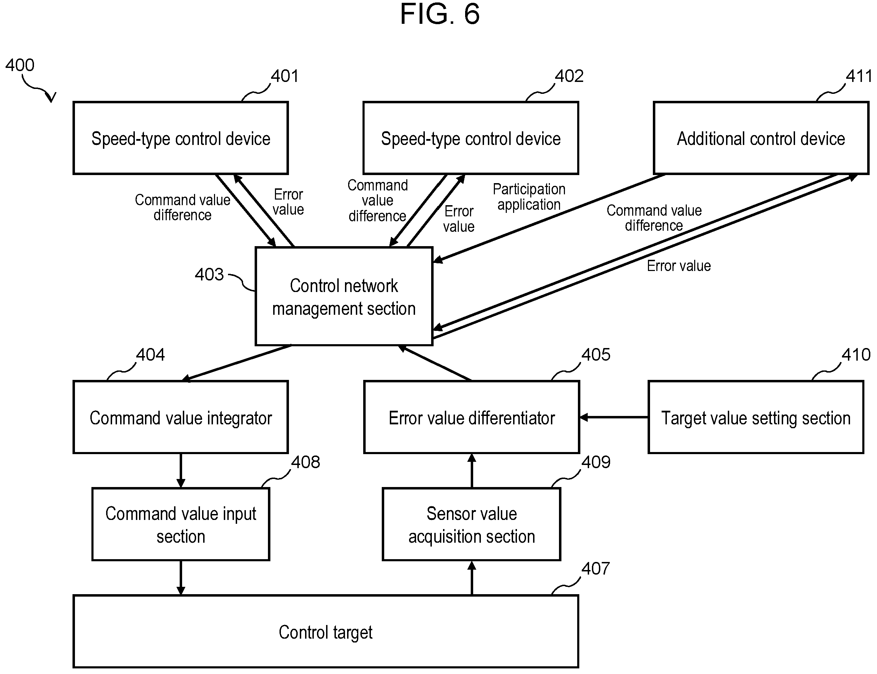

FIG. 6 is a functional block diagram depicting a configuration of a control system 400 according to the second embodiment. The control system 400 is a system for controlling a single control target 407 from a plurality of speed-type control devices. The control system 400 is provided with speed-type control devices 401 and 402, a control network management section 403, a command value integrator 404, an error value differentiator 405, the control target 407, a command value input section 408, a sensor value acquisition section 409, and a target value setting section 410. Here, for example, the speed-type control devices 401 and 402 are PLCs, and the control target 407 is a motor.

The speed-type control devices 401 and 402 transmit command value differences to the control target 407. The command value integrator 404 integrates the command value differences and transmits the resultant value to the command value input section 408. The command value input section 408 transmits the integrated command value difference to the control target 407 as an actual command value. The sensor value acquisition section 409 acquires the state of the control target 407 by a sensor and inputs the value thereof to the error value differentiator 405. Unlike the first embodiment, the target value setting section 410 inputs a set target value to the error value differentiator. The error value differentiator 405 transmits an error value, which is a difference between the target value and the sensor value, together with a previously transmitted error value to the speed-type control devices 401 and 402. The speed-type control devices 401 and 402 generate the next command value differences by using the received error value and the previous error value.

The command value difference and the error value are transmitted and received via the control network management section 403 as in the first embodiment. The control network management section 403 has functions similar to those of the control system reception section 304 and the control network management section 306 of the first embodiment.

### <Adding method of control device>

Processing in the case where an additional control device (additional control device 411) participates in the control system 400 will be described. The additional control device 411 requests the control network management section 403 to transmit an error value as a participation application. When receiving the participation application (transmission request of the error value) from the additional control device 411, the control network management section 403 transmits, to the additional control device 411, the error value (control information) received from the error value differentiator 405. Since the control can be performed using only the transmitted error value in the speed-type control, the additional control device 411 does not need to acquire the control state information unlike the first embodiment.

### <Technical effect>

As described above, in the control system 400 according to the second embodiment, a plurality of control devices are the speed-type control devices 401 and 402. In the control system 400, the command value integrator 404 executes processing of integrating the command value differences transmitted from the speed-type control devices 401 and 402. The error value differentiator 405 executes processing of transmitting the error value, which is the difference between the feedback value from the control target 407 and the target value, together with the previous error value to the speed-type control devices 401 and 402. The control network management section 403 manages transmission and reception of the command value differences from the speed-type control devices 401 and 402 and the error value and the target value from the error value differentiator 405.

According to the control system 400 of the second embodiment, it is not necessary for the control network management section 403 to transmit the control state information in response to the participation application received from the additional control device 411, and it is possible to increase or decrease the number of control devices without the control state recording section 305. In this way, the control system 400 performs simple processing with no processing load for the control history.

### [Third Embodiment]

In the second embodiment, the control system in which one control target 407 is controlled by the plurality of speed-type control devices 401, 402, and 411 has been described. In a third embodiment, a control system in which a plurality of control targets are controlled in a configuration similar to that of the second embodiment will be described.

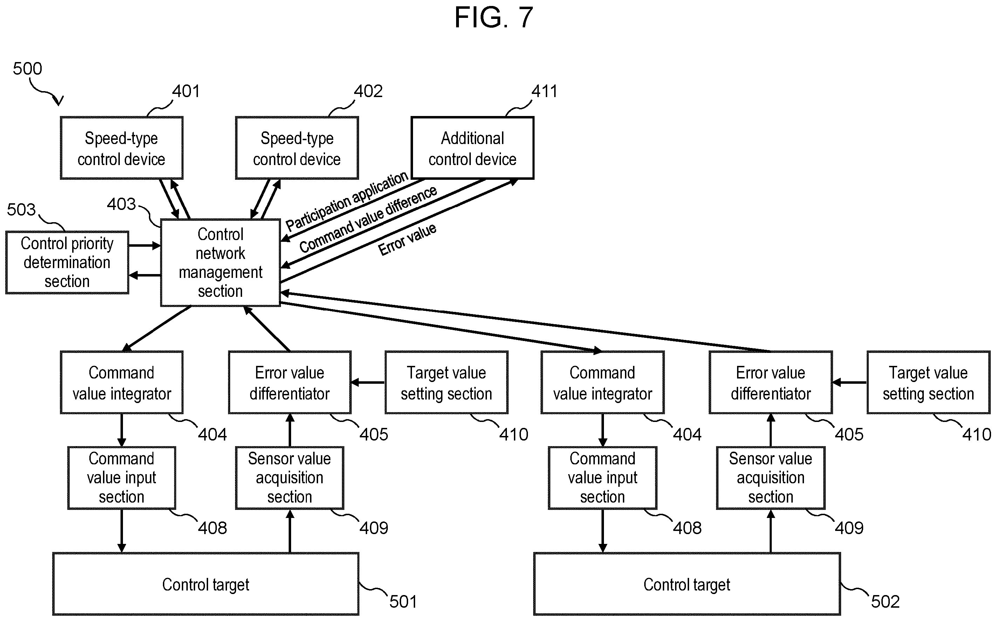

FIG. 7 is a functional block diagram depicting a configuration of a control system 500 according to the third embodiment. Unlike the second embodiment, the control system 500 has two control targets 501 and 502. A command value integrator 404, an error value differentiator 405, a command value input section 408, a sensor value acquisition section 409, and a target value setting section 410 are provided for each control target. The number of control network management sections 403 is one, and the control network management section 403 transmits and receives information to/from the command value integrator 404 and the error value differentiator 405 for each control target.

Each of the speed-type control devices 401 and 402 has the command value input and the sensor value output as in the second embodiment. Information regarding the command value and the sensor value of each device is distinguished for each of the control targets 501 and 502, and when the sensor value is used, it is possible to discriminate which control target is controlled.

Further, the control system 500 is provided with a control priority determination section 503 capable of transmitting and receiving information to/from the control network management section 403. The control priority determination section 503 is configured to be capable of selecting which control target is given priority for control. The control priority can be dynamically changed. The control priority determination section 503 transmits control priority information to the control device via the control network management section 403 on the basis of the received control command value and preset control target information. For example, in the case where the control targets are equivalent in the preset control target information, the priority is lowered for the control target to which the command value has been transmitted, and the control of the control target to which the command value has not been transmitted is given priority. Alternatively, for example, when the target control cycle of the control target 501 is 100 ms and the target control cycle of the control target 502 is 200 ms in the control target information, the priority of the control target 501 is raised if the elapsed times from the previous control are 80 ms and 120 ms, respectively. The control priority determination section 503 can perform such adjustment of the control priority. The adjustment of the control priority is not limited to the above-described method, and any method can be used.

In the present embodiment, the case where the number of control targets is two has been described, but the number may be three or more. Even in the case where the number of control targets is three or more, it is sufficient if the control system 500 is configured as with the above.

### <Technical effect>

As described above, according to the control system 500 of the third embodiment, it is possible to control a plurality of control targets in the control system for speed-type control similar to that of the second embodiment.

### [Modified example]

The present disclosure is not limited to the above-described embodiments, and includes various modified examples. For example, the above-described embodiments have been described in detail for the purpose of clearly explaining the present disclosure, and it is not necessary to include all of the above-described configurations. In addition, a part of an embodiment can be replaced with a configuration of another embodiment. In addition, a configuration of an embodiment can be added to a configuration of another embodiment. In addition, it is also possible to add, delete, or replace some of configurations of an embodiment to/from/with some of configurations of another embodiment.

## Claims

1. A control system (300) comprising:
a plurality of control devices (301, 302);
at least one control target (307) that is controlled by the plurality of control devices; and
a computer (303) that is connected to the plurality of control devices and the control target via a control network,
wherein the computer is configured to execute
processing of receiving an application to participate in the control system from an additional control device (311),
processing of acquiring information related to states of the plurality of control devices and transmitting the information to the additional control device, and
processing of managing transmission and reception in the control network.

2. The control system according to claim 1,
wherein the computer further executes processing of recording the information related to the states of the plurality of control devices in a storage device (305), and
the computer is configured to transmit, in the processing of transmitting, the recorded information related to the states of the plurality of control devices to the additional control device that has transmitted the participation application.

3. The control system according to claim 1,
wherein the plurality of control devices transmit command value differences to the computer, and
the computer is configured to execute
processing of integrating the command value differences transmitted from the control devices, and
processing of transmitting, to the plurality of control devices, an error value that is a difference between a feedback value from the control target and a target value together with a previous error value as the information related to the states of the plurality of control devices.

4. The control system according to claim 3,
wherein the at least one control target includes a plurality of control targets, and
the computer is configured to further execute processing of determining priority of control of the plurality of control targets on a basis of command values from the plurality of control devices, the information related to the states of the plurality of control devices, or information related to each of the plurality of control targets.

5. The control system according to claim 1,
wherein the plurality of control devices are speed-type control devices.

6. The control system according to claim 1,
wherein any of the plurality of control devices is arranged on a cloud in a manner capable of communicating with the computer via Internet.

7. The control system according to claim 1,
wherein the control network is of a Publish/Subscribe type.
